# EUROPÄISCHE PATENTSCHRIFT

(11) **EP 2 141 094 B1**
(45) Veröffentlichungstag und Bekanntmachung des Hinweises auf die Patenterteilung: **27.04.2011**
(21) Anmeldenummer: 09155062.4
(22) Anmeldetag: 13.03.2009
(51) Int. Cl.: B65G 21/18

(54) **Handhabungseinrichtung für Getränkebehälter**
Handling device for drink containers
Dispositif de manipulation pour récipients à boissons

(30) Priorität: 30.06.2008 DE 202008008756 U
(43) Veröffentlichungstag der Anmeldung: 06.01.2010
(73) Patentinhaber: Krones AG, 93073 Neutraubling (DE)
(72) Erfinder: Bauer, Stefan, 83131 Nußdorf am Inn (DE)
(74) Vertreter: Benninger, Johannes

(56) Entgegenhaltungen:
- DE-A1-102004 047 826
- DE-B- 1 807 213
- DE-U1- 29 616 332

## Beschreibung

Die vorliegende Erfindung betrifft eine Handhabungseinrichtung für Getränkebehälter mit den Merkmalen des unabhängigen Anspruchs 1.

Bei der industriellen Getränkeabfüllung in Getränkebehälter und Flaschen werden diese von einer Vielzahl von Handhabungsgeräten zwischen zahlreichen Stationen transportiert und zwischen den Handhabungsgeräten jeweils übergeben. Da zur Sicherstellung eines hohen Durchsatzes und einer hohen Taktzahl bei der Handhabung jeweils mehrere Getränkebehälter oder Flaschen parallel abgefüllt und übergeben werden müssen, sind auch zahlreiche Handhabungsgeräte für die gleichzeitige Aufnahme und Übergabe leerer oder befüllter Behälter vorbereitet.

Eine bekannte Variante von Handhabungsgeräten besteht in sog. Greiferköpfen, die wahlweise als Zangengreifer oder als Sauggreifer o. dgl. ausgebildet sein können. Für spezielle Anwendungsfälle sind mehrere solcher Greifeinrichtungen an einem sog. Greiferkopf angeordnet, so dass sie über diesen Greiferkopf parallel gesteuert und bewegt werden können. Sollen solche Greiferköpfe für unterschiedliche Behälterformen und/oder Behälter- oder Flaschengrößen angepasst werden, so müssen meist die einzelnen Greifer im Greiferkopf ausgetauscht werden, was aufgrund des dafür erforderlichen Zeit- und Montageaufwandes einen erheblichen Nachteil bei einer schnellen Umrüstung einer Abfüllmaschine auf variable Behältergrößen darstellt.

DE 1 807 213 beschreibt eine gattungsgemäße Handhabungseinrichtung zum Ein-und Auspacken von Flaschen. Diese weist einen beweglichen Maschinenkopf mit einem an diesem befestigten Traggestell auf. In das Traggestell sind Druckluftführungen eingearbeitet, so dass dieses einfach mit pneumatischen Flaschengreifern bestückt werden kann.

Ein Ziel der vorliegenden Erfindung besteht darin, eine einfach und schnell wechselbare Handhabungseinrichtung für Getränkebehälter zur Verfügung zu stellen, welche die Nachteile des Standes der Technik vermeidet.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Die Erfindung umfasst eine Handhabungseinrichtung für Getränkebehälter mit mehreren steuerbaren Greifköpfen mit Tragplatten und mit einem Trägersystem. Die Greifköpfe sind jeweils an Tragplatten angeordnet und befestigt. Erfindungsgemäß weist die Handhabungseinrichtung Halteschienen auf. Die Tragplatten sind jeweils lösbar an Halteschienen eines Trägersystems verankert. Die Verbindung zwischen den Tragplatten und den Halteschienen des Trägersystems umfasst wenigstens zwei Aufhängungspunkte, die jeweils durch Profilstege an den Halteschienen gebildet sind, zwischen denen jede der Tragplatten durch einseitiges Hintergreifen einer korrespondierenden Profilierung am ersten Aufhängungspunkt sowie durch Umgreifen eines federnd gelagerten und feststellbaren Rasthebels am zweiten Aufhängungspunkt gehalten ist. Der Rasthebel ist hierbei an der Tragplatte gelagert.

Vorzugsweise weist die Tragplatte am ersten Aufhängungspunkt einen hakenförmigen Vorsprung zum Hintergreifen der profilierten Halteschiene auf. Zudem kann die Tragplatte am ersten Aufhängungspunkt eine der Kontur des Profilstegs der Halteschiene angepasste muldenförmige erste Anlagefläche aufweisen. Auf diese Weise ist die muldenförmige erste Anlagefläche nach oben durch den hakenförmigen Vorsprung und nach unten durch eine verlängerte, gerade erste Anschlagfläche zur Definition der Montageposition der Tragplatte am ersten Aufhängungspunkt der Halteschiene begrenzt. Die erfindungsgemäße Handhabungseinrichtung ermöglicht die lösbare Befestigung einer Mehrzahl von parallel angeordneten Tragplatten mit jeweils daran befestigten Greiferköpfen o. dgl. anderen Halteeinrichtungen für Getränkebehälter und/oder Flaschen an den Halteschienen.

Eine weitere Ausgestaltung der erfindungsgemäßen Handhabungseinrichtung sieht vor, dass die Tragplatte am zweiten Aufhängungspunkt eine der Kontur des Profilstegs der Halteschiene angepasste muldenförmige zweite Anlagefläche aufweist. Somit kann die muldenförmige zweite Anlagefläche nach oben offen und ohne Vorsprung ausgestaltet sein, während sie nach unten durch eine zweite Anschlagfläche zur Definition der Montageposition der Tragplatte am zweiten Aufhängungspunkt der Halteschiene begrenzt ist. Die Montage der Tragplatte an den Halteschienen erfolgt somit durch Einhängen des hakenförmigen Vorsprungs am ersten Aufhängungspunkt, wobei die muldenförmige erste Anlagefläche an dem entsprechend konturierten Haltesteg anliegt, wonach die Tragplatte am zweiten Aufhängungspunkt nach oben in Richtung zum zweiten Haltesteg geschoben wird, bis die zweite Anlagefläche am zweiten Profilsteg der Halteschiene anliegt. In dieser Montageposition kann der Rasthebel einrasten und für eine Verriegelung der Tragplatte in der gewünschten Montageposition sorgen. Eine Entnahme der Tragplatte von den Halteschienen erfolgt durch Entriegeln des Rasthebels, durch Schwenken der Tragplatte um den ersten Aufhängungspunkt unter Abziehen am zweiten Aufhängungspunkt nach unten. Zuletzt kann die Rasthalterung des ersten Aufhängungspunktes gelöst werden.

Vorzugsweise ist der Rasthebel unterhalb der zweiten Anschlagfläche schwenkbar an der Tragplatte gelagert. Die Federunterstützung kann dafür sorgen, dass der Rasthebel in die verriegelte Position gedrückt wird, sobald die Tragplatte am zweiten Aufhängungspunkt an die Halteschiene angelegt wird. Der federunterstützte Rasthebel sorgt somit für die Fixierung der Tragplatte in ihrer Position. Zum Lösen der Tragplatte muss der Rasthebel gegen die Rückstellkraft der Feder aus dem Eingriff mit der profilierten Halteschiene am zweiten Aufhängungspunkt gebracht werden. Der Rasthebel weist hierzu einen Rastvorsprung auf, der in Montageposition der Tragplatte den Profilsteg am zweiten Aufhängungspunkt gegenüber liegend der zweiten Anlagefläche umgreift.

Um ein unbeabsichtigtes Lösen der Tragplatte aus ihrer Montageposition zu verhindern, kann der Rasthebel in der Montageposition der Tragplatte mittels einer Feststellschraube in seiner verrasteten Lage fixiert werden. Hierzu eignet sich eine Knebelschraube o. dgl., die in der verrasteten Lage des Hebels diesen unbeweglich fixiert und gegen die Tragplatte verspannt. Durch Lösen der Feststellschraube kann der Schwenkbereich des Rasthebels wieder freigegeben werden.

Eine weitere Ausgestaltung der Erfindung sieht vor, dass die wenigstens zwei Halteschienen des Trägersystems mit den jeweils daran angeordneten Profilstegen jeweils parallel und beabstandet voneinander angeordnet sind. Dabei sind die Halteschienen vorzugsweise jeweils durch Strangpressprofile mit über ihrer Länge konstanten Querschnitten gebildet. Auf diese Weise können an den Halteschienen eine Mehrzahl oder Vielzahl von parallel angeordneten und gleich oder unterschiedlich beabstandeten Tragplatten lösbar fixiert werden.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt in einer schematischen Perspektivdarstellung eine Ausführungsform einer Tragplatte einer erfindungsgemäßen Handhabungseinrichtung für Getränkebehälter.
Fig. 2 zeigt eine schematische Draufsicht der Tragplatte gemäß Fig. 1.
Fig. 3 zeigt eine schematische Darstellung der in einem Schienensystem verankerten Tragplatte.
Fig. 4 zeigt eine schematische Perspektivdarstellung einer profilierten Halteschiene des Schienensystems zum Verankern von Tragplatten.
Fig. 5 zeigt einen schematischen Querschnitt der Halteschiene gemäß Fig. 4.
Fig. 6 zeigt einen schematische Perspektivdarstellung des Schienensystems zum Verankern von Tragplatten.

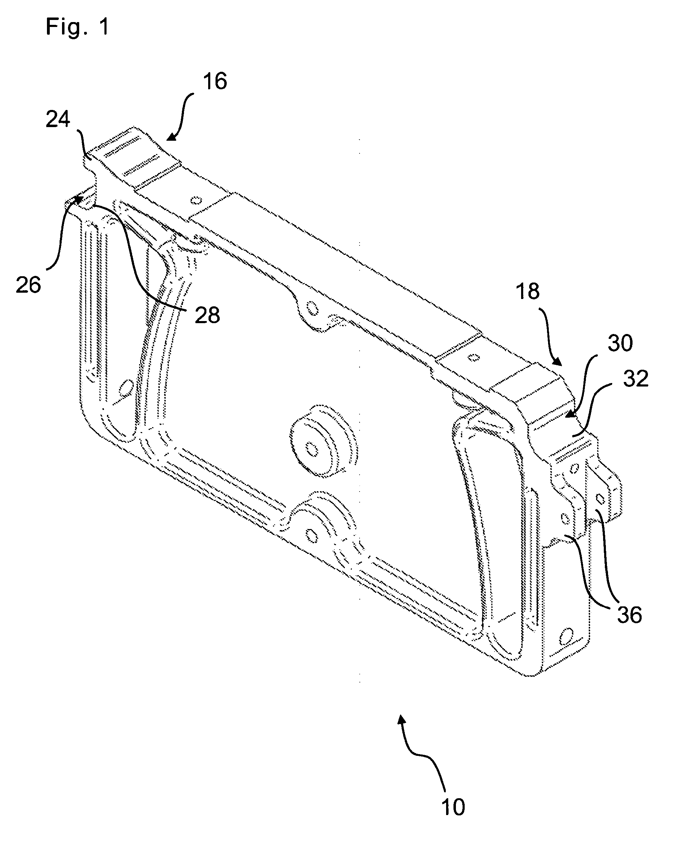

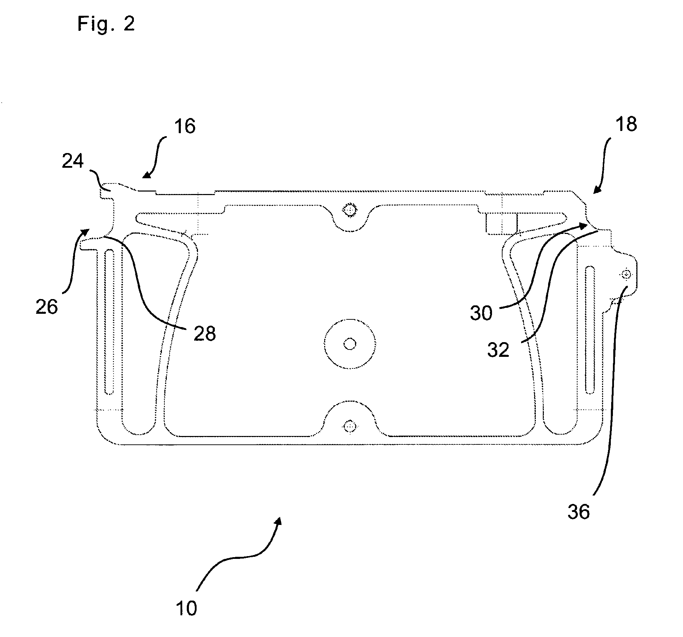

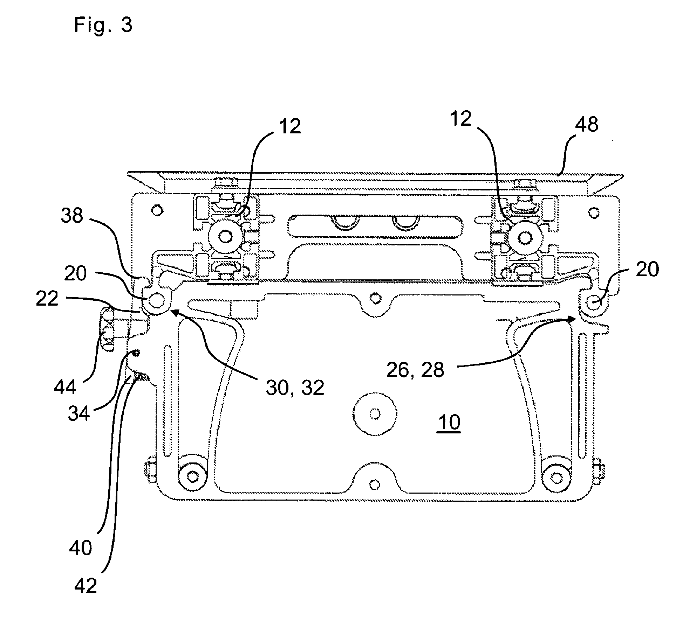

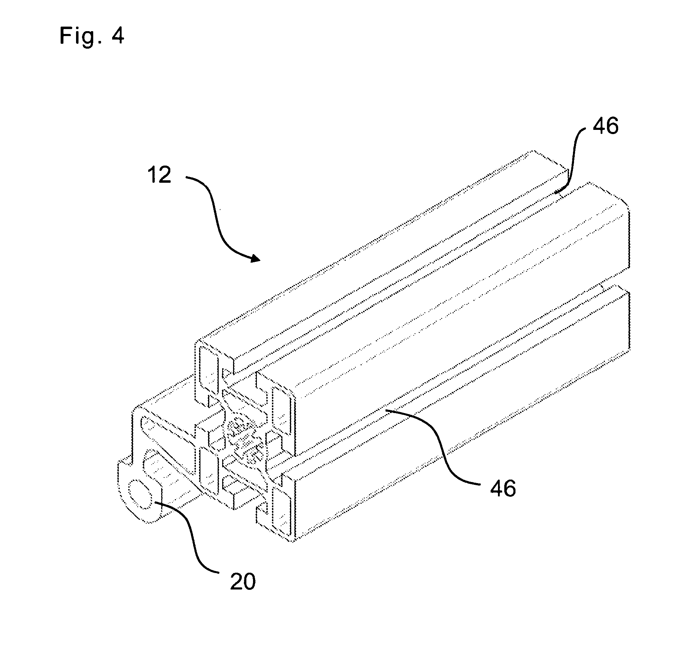

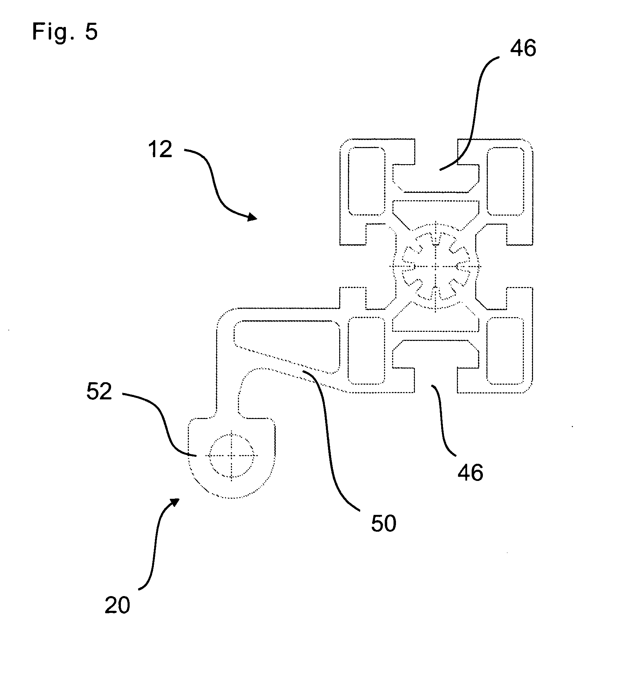

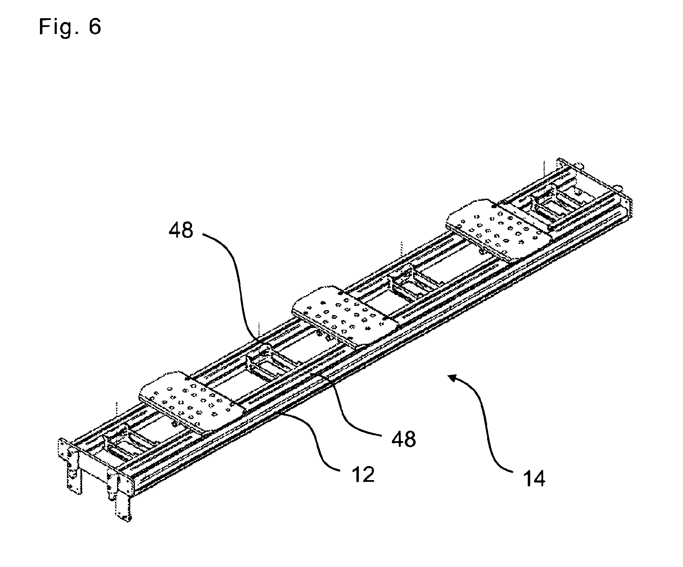

Anhand der schematischen Darstellungen der Figuren 1 bis 3 ist ein Ausführungsbeispiel einer Tragplatte 10 einer erfindungsgemäßen Handhabungseinrichtung für Getränkebehälter und deren lösbare Verriegelung an Halteschienen 12 (vgl. Figuren 4 und 5) eines Trägersystems 14 (vgl. Fig. 6) verdeutlicht. An einer solchen Tragplatte 10 kann wenigstens ein - hier nicht dargestellter - steuerbarer Greifkopf oder können wahlweise mehrere steuerbare Greifköpfe zur Aufnahme von Flaschen oder Getränkebehältern angeordnet und befestigt sein. Die Tragplatten 10 sind jeweils lösbar an zwei parallel und auf gleicher Höhe angeordneten Halteschienen 12 des Trägersystems 14 verankert, wie dies anhand der Figuren 3 bis 6 näher verdeutlicht wird.

Die Verbindung zwischen der Tragplatte 10 und den Halteschienen 12 des Trägersystems 14 weist wenigstens zwei Aufhängungspunkte 16 und 18 auf, die jeweils durch Profilstege 20 an den Halteschienen 12 definiert sind, zwischen denen jede der Tragplatten 10 durch einseitiges Hintergreifen einer korrespondierenden Profilierung am ersten Aufhängungspunkt 16 sowie durch Umgreifen eines federnd gelagerten und feststellbaren Rasthebels 22 (vgl. Fig. 3) am zweiten Aufhängungspunkt 18 gehalten ist. Zu diesem Zweck weist die Tragplatte 10 am ersten Aufhängungspunkt 16 einen hakenförmigen Vorsprung 24 zum Hintergreifen des Profilstegs 20 der profilierten Halteschiene 12 auf. Zudem kann die Tragplatte 10 am ersten Aufhängungspunkt 16 eine der Kontur des Profilstegs 20 der Halteschiene 12 angepasste muldenförmige erste Anlagefläche 26 aufweisen. Auf diese Weise ist die muldenförmige erste Anlagefläche 26 nach oben durch den hakenförmigen Vorsprung 24 und nach unten durch eine verlängerte, gerade erste Anschlagfläche 28 zur Definition der Montageposition der Tragplatte 10 am ersten Aufhängungspunkt 16 der Halteschiene 12 begrenzt.

Die hier nicht in allen Bauteilen dargestellte Handhabungseinrichtung ermöglicht die lösbare Befestigung einer Mehrzahl von parallel angeordneten Tragplatten 10 mit jeweils daran befestigten Greiferköpfen o. dgl. anderen Halteeinrichtungen für Getränkebehälter und/oder Flaschen an den Halteschienen 12.

Weiterhin weist die Tragplatte 10 am zweiten Aufhängungspunkt 18 eine der Kontur des Profilstegs 20 der Halteschiene 12 angepasste muldenförmige zweite Anlagefläche 30 auf. Diese muldenförmige zweite Anlagefläche 30 ist nach oben offen und ohne Vorsprung ausgestaltet, während sie nach unten durch eine zweite Anschlagfläche 32 zur Definition der Montageposition der Tragplatte 10 am zweiten Aufhängungspunkt 18 der Halteschiene 12 begrenzt ist. Die Montage der Tragplatte 10 an den Halteschienen 12 erfolgt somit durch Einhängen des hakenförmigen Vorsprungs 24 am ersten Aufhängungspunkt 16, wobei die muldenförmige erste Anlagefläche 26 an dem entsprechend konturierten Haltesteg 20 anliegt, wonach die Tragplatte 10 am zweiten Aufhängungspunkt 18 nach oben in Richtung zum zweiten Haltesteg 20 geschoben wird, bis die zweite Anlagefläche 30 am zweiten Profilsteg 20 der Halteschiene 12 anliegt. In dieser Montageposition kann der Rasthebel 22 den Profilsteg 20 teilweise umgreifen und dort einrasten (vgl. Fig. 3) und auf diese Weise für eine Verriegelung der Tragplatte 10 in der gewünschten Montageposition sorgen. Eine Entnahme der Tragplatte 10 von den Halteschienen 12 erfolgt wiederum durch Entriegeln des Rasthebels 22, durch Schwenken der Tragplatte 10 um den ersten Aufhängungspunkt 16 unter Abziehen am zweiten Aufhängungspunkt 18 nach unten. Zuletzt kann die Rasthalterung des ersten Aufhängungspunktes 16 gelöst werden.

Wie anhand der Fig. 3 verdeutlicht, ist der Rasthebel 22 unterhalb der zweiten Anschlagfläche 30 schwenkbar an einer Seite der Tragplatte 10 gelagert. Zur Aufnahme einer Schwenkachse 34 des Rasthebels 22 sind zwei Lagerlaschen 36 ausgeformt, zwischen denen der Rasthebel 22 schwenkbar beweglich ist. Oberhalb der Schwenkachse 34 weist der Rasthebel 22 einen Rasthaken 38 zum Umgreifen des Profilstegs 20 auf. Unterhalb der Schwenkachse 34 ist ein Druckfläche 40 zur manuellen Betätigung des Rasthebels 22 vorgesehen, die zur Entriegelung gedrückt werden kann, damit der Rasthebel 22 und damit der Rasthaken 38 aus dem Eingriff mit dem Profilsteg 20 gebracht werden kann. Unterhalb der Andruckfläche 40 ist eine Rückstellfeder 42 angeordnet, die den Rasthebel 22 in die verriegelte Lage vorspannt. Die Federunterstützung der Rückstellfeder 42 sorgt dafür, dass der Rasthebel 22 in die verriegelte Position gedrückt wird, sobald die Tragplatte 10 am zweiten Aufhängungspunkt 18 an die Halteschiene 12 angelegt wird. Der federunterstützte Rasthebel 22 sorgt somit für die Fixierung der Tragplatte 10 in ihrer Position. Zum Lösen der Tragplatte 10 muss der Rasthebel 22 gegen die Rückstellkraft der Feder 42 aus dem Eingriff mit der profilierten Halteschiene 12 am zweiten Aufhängungspunkt 18 gebracht werden.

Um ein unbeabsichtigtes Lösen der Tragplatte 10 aus ihrer Montageposition zu verhindern, kann der Rasthebel 22 in der Montageposition der Tragplatte 10 mittels einer Feststellschraube 44 in seiner verrasteten Lage fixiert werden. Hierzu eignet sich eine Knebelschraube o. dgl., die in der verrasteten Lage des Hebels 22 diesen unbeweglich fixiert und gegen die Tragplatte 10 verspannt. Durch Lösen der Feststellschraube 44 kann der Schwenkbereich des Rasthebels 22 wieder freigegeben werden.

Eine mögliche Ausgestaltung der Halteschienen 12 ist in Fig. 4 in schematischer Perspektivdarstellung gezeigt, während die Fig. 5 die Halteschiene 12 in einer Querschnittdarstellung zeigt. Die Halteschiene 12 weist einen rechteckförmigen Querschnitt mit abgerundeten Längskanten sowie jeweils mittig in den Längsseiten angeordnete T-förmige Nuten 46 auf, die zur Verschraubung der Halteschienen 12 an geeigneten Trägern 48 oder Aufhängungen eines Trägersystems 14 dienen können, wie dies in den Figuren 3 und 6 angedeutet ist.

Weiterhin weist jede Halteschiene 12 einen Profilsteg 20 auf, der sich von einer Längsseite der Schiene 12 über einen Auslegerarm 50 nach unten erstreckt und in einem verdickten Stegabschnitt 52 endet, der nach unten abgerundet und oben zum Auslegerarm 50 hin abgeflachte Oberseiten aufweist, die zur besseren Verrastung des Rasthebels 22 bzw. des hakenförmigen Vorsprungs 24 des ersten Aufhängungspunktes 16 dienen.

Dabei sind die Halteschienen 12 vorzugsweise jeweils durch Strangpressprofile mit über ihrer Länge konstanten Querschnitten gebildet.

Wie anhand der perspektivischen Darstellung der Fig. 6 verdeutlicht, sind zwei Halteschienen 12 des Trägersystems 14 mit den jeweils daran angeordneten Profilstegen 20 jeweils parallel und beabstandet voneinander an den Trägern 48 befestigt. Auf diese Weise können an den Halteschienen 12 eine Mehrzahl oder Vielzahl von parallel angeordneten und gleich oder unterschiedlich beabstandeten Tragplatten 10 lösbar fixiert werden.

Wie anhand der Figuren 1 bis 3 verdeutlicht ist, weisen die Tragplatten 10 jeweils eine definierte Dicke und eine rechteckförmige oder anders gestaltete Grundfläche deutlich größerer Ausdehnung als ihre Stärke auf.

Die Tragplatten 10 und/oder die Halteschienen 12 können jeweils aus Kunststoff oder einem geeigneten Metall, bspw. einem Leichtmetall wie Aluminium o. dgl. gefertigt sein. Die Tragplatten 10 können zweckmäßigerweise aus Spitzguss- oder Druckgussmaterial bestehen, während die Halteschienen 12 aus Strangpressprofilen bestehen, wahlweise aus Kunststoff oder einem geeigneten Leichtmetall.

## Patentansprüche

1. Handhabungseinrichtung für Getränkebehälter mit mehreren steuerbaren Greifköpfen mit Tragplatten (10) und mit einem Trägersystem (14), wobei die Greifköpfe jeweils an den Tragplatten (10) angeordnet und befestigt sind, wobei die Handhabungseinrichtung Halteschienen (12) aufweist, wobei die Tragplatten (10) jeweils lösbar an den Halteschienen (12) des Trägersystems (14) verankert sind, wobei die Verbindung zwischen den Tragplatten (10) und den Halteschienen (12) des Trägersystems (14) wenigstens zwei Aufhängungspunkte (16, 18) aufweist, die jeweils durch Profilstege (20) an den Halteschienen (12) gebildet sind, **dadurch gekennzeichnet, dass** zwischen den Aufhängungspunkten (16, 18) jede der Tragplatten (10) durch einseitiges Hintergreifen einer korrespondierenden Profilierung am ersten Aufhängungspunkt (16) sowie durch Umgreifen eines federnd gelagerten und feststellbaren Rasthebels (22) am zweiten Aufhängungspunkt (18) gehalten ist, wobei der Rasthebel (22) an der Tragplatte gelagert ist.

2. Handhabungseinrichtung nach Anspruch 1, **dadurch gekennzeichnet, dass** die Tragplatte (10) am ersten Aufhängungspunkt (16) einen hakenförmigen Vorsprung (24) zum Hintergreifen der profilierten Halteschiene (12) aufweist.

3. Handhabungseinrichtung nach Anspruch 1 oder 2, **dadurch gekennzeichnet, dass** die Tragplatte (10) am ersten Aufhängungspunkt (16) eine der Kontur des Profilstegs (20) der Halteschiene (12) angepasste muldenförmige erste Anlagefläche (26) aufweist.

4. Handhabungseinrichtung nach Anspruch 3, **dadurch gekennzeichnet, dass** die muldenförmige erste Anlagefläche (26) nach oben durch den hakenförmigen Vorsprung (24) und nach unten durch eine verlängerte, gerade erste Anschlagfläche (28) zur Definition der Montageposition der Tragplatte (10) am ersten Aufhängungspunkt (16) der Halteschiene (12) begrenzt ist.

5. Handhabungseinrichtung nach einem der Ansprüche 1 bis 4, **dadurch gekennzeichnet, dass** die Tragplatte (10) am zweiten Aufhängungspunkt (18) eine der Kontur des Profilstegs (20) der Halteschiene (12) angepasste muldenförmige zweite Anlagefläche (30) aufweist.

6. Handhabungseinrichtung nach Anspruch 5, **dadurch gekennzeichnet, dass** die muldenförmige zweite Anlagefläche (30) nach oben offen und nach unten durch eine zweite Anschlagfläche (32) zur Definition der Montageposition der Tragplatte (10) am zweiten Aufhängungspunkt (18) der Halteschiene (12) begrenzt ist.

7. Handhabungseinrichtung nach Anspruch 5 oder 6, **dadurch gekennzeichnet, dass** der Rasthebel (22) unterhalb der zweiten Anschlagfläche (28) schwenkbar an der Tragplatte (10) gelagert ist.

8. Handhabungseinrichtung nach Anspruch 7, **dadurch gekennzeichnet, dass** der Rasthebel (22) einen Rastvorsprung (38) aufweist, der in Montageposition der Tragplatte (10) den Profilsteg (20) am zweiten Aufhängungspunkt (18) gegenüber liegend der zweiten Anlagefläche (30) umgreift.

9. Handhabungseinrichtung nach Anspruch 7 oder 8, **dadurch gekennzeichnet, dass** der Rasthebel (22) in der Montageposition der Tragplatte (10) mittels einer Feststellschraube (44) in seiner verrasteten Lage fixierbar ist.

10. Handhabungseinrichtung nach einem der Ansprüche 1 bis 9, **dadurch gekennzeichnet, dass** die wenigstens zwei Halteschienen (12) des Trägersystems (14) mit den jeweils daran angeordneten Profilstegen (20) jeweils parallel und beabstandet voneinander angeordnet sind.

11. Handhabungseinrichtung nach einem der Ansprüche 1 bis 10, **dadurch gekennzeichnet, dass** die Halteschienen (12) jeweils durch Strangpressprofile mit über ihrer Länge konstanten Querschnitten gebildet sind.

12. Handhabungseinrichtung nach einem der Ansprüche 1 bis 11, **dadurch gekennzeichnet, dass** an den Halteschienen (12) eine Mehrzahl von parallel angeordneten Tragplatten (10) lösbar fixierbar sind.

## Claims

1. Handling device for beverage containers with several controllable gripping heads with support plates (10) and with a support system (14), whereby said gripping heads in each case are arranged at and fastened to the support plates (10), whereby said handling device comprises support rails (12) with the support plates (10) in each case being removably anchored to the support rails (12) of the support system (14), whereby the connection between the support plates (10) and the support rails (12) of the said support system (14) comprises at least two suspension points (16, 18), each formed by profile webs (20) on the support rails (12), with said profile webs being **characterized in that** each of the support plates (10) is held between the suspension points (16, 18) by one-sided engagement behind a corresponding profile at the first suspension point (16) and by being encompassed by a spring-mounted and lockable latch lever (22) at the second suspension point (18), whereby the latch lever (22) is positioned on the support plate (10).

2. Handling device according to claim 1, **characterized in that** the support plate (10) comprises a hook-shaped projection (24) for engaging behind the profiled support rail (12), with said projection being arranged on the first suspension point (16).

3. Handling device according to claim 1 or 2, **characterized in that** the support plate (10) comprises a trough-shaped first contact surface (26) being matched to the contour of the profile web (20) of the support rail (12) and with said contact surface (26) being arranged on the first suspension point (16).

4. Handling device according to claim 3, **characterized in that** the trough-shaped first contact surface (26) is confined at the top by the hook-shaped projection (24) and at the bottom by an elongated, straight, first stop surface (28), thus defining the mounting position of the support plate (10) at the first suspension point (16) of the support rail (12).

5. Handling device according to one of the claims 1 to 4, **characterized in that** the support plate (10) comprises a trough-shaped second contact surface (30) being matched to the contour of the profile web (20) of the support rail (12) and with said contact surface (30) being arranged on the second suspension point (18).

6. Handling device according to claim 5, **characterized in that** the trough-shaped second contact surface (30) is open at the top and confined at the bottom by a second stop surface (32), thus defining the mounting position of the support plate (10) at the second suspension point (18) of the support rail (12).

7. Handling device according to claim 5 or 6, **characterized in that** the latch lever (22) is positioned below the second stop surface (28) at the support plate (10) so as to be pivotable.

8. Handling device according to claim 7, **characterized in that** the latch lever (22) comprises a latching projection (38) that encompasses the profile web (20) at the second suspension point (18) opposite to the second contact surface (30) when the support plate (10) is in mounting position.

9. Handling device according to claim 7 or 8, **characterized in that** the latch lever (22) can be fixed in its snapped position by means of a locking screw (44) when the support plate (10) is in mounting position.

10. Handling device according to one of the claims 1 to 9, **characterized in that** the at least two support rails (12) of the support system (14) with the profile webs (20) arranged on each of said support rails (12) are arranged in each case in parallel and spaced apart from each other.

11. Handling device according to one of the claims 1 to 10, **characterized in that** the support rails (12) are in each case formed by extruded profiles having constant cross-sections along their length.

12. Handling device according to one of the claims 1 to 11, **characterized in that** it is possible to removably fix a plurality of parallely arranged support plates (10) to the support rails (12).

## Revendications

1. Dispositif de manutention pour des récipients de boisson, comportant plusieurs têtes de préhension, aptes à être commandées et munies de plaques de support (10), et comportant un système de support (14), les têtes de préhensions étant agencées et fixées respectivement sur les plaques de support (10), le dispositif de manutention comportant des rails de fixation (12), les plaques de support (10) étant ancrées chacune de manière amovible sur les rails de fixation (12) du système de support (14), l'assemblage entre les plaques de support (10) et les rails de fixation (12) du système de support (14) comportant au moins deux points de suspension (16, 18), qui sont formés chacun par des barres profilées (20) sur les rails de fixation (12), **caractérisé en ce qu'**entre les points de suspension (16, 18), chacune des plaques de support (10) est maintenue du fait qu'elle enserre unilatéralement par l'arrière un profilage correspondant sur le premier point de suspension (16) et du fait qu'elle entoure un levier de blocage (22) monté sur ressort et apte à être immobilisé sur le deuxième point de suspension (18), le levier de blocage (22) étant monté sur la plaque de support (10).

2. Dispositif de manutention selon la revendication 1, **caractérisé en ce que** la plaque de support (10) au niveau du premier point de suspension (16) comporte une saillie (24) en forme de crochet, destinée à enserrer par l'arrière le rail de fixation (12) profilé.

3. Dispositif de manutention selon la revendication 1 ou 2, **caractérisé en ce que** la plaque de support (10) au niveau du premier point de suspension (16) comporte une première surface d'appui (26) en forme de cuvette, ajustée au contour de la barre profilée (20) du rail de fixation (12).

4. Dispositif de manutention selon la revendication 3, **caractérisé en ce que** la première surface d'appui (26) en forme de cuvette est délimitée vers le haut par la saillie (24) en forme de crochet et vers le bas par une première surface de butée (28) prolongée droite pour définir la position de montage de la plaque de support (10) sur le premier point de suspension (16) du rail de fixation (12).

5. Dispositif de manutention selon l'une quelconque des revendications 1 à 4, **caractérisé en ce que** la plaque de support (10) au niveau du deuxième point de suspension (18) comporte une deuxième surface d'appui (30) en forme de cuvette, ajustée au contour de la barre profilée (20) du rail de fixation (12).

6. Dispositif de manutention selon la revendication 5, **caractérisé en ce que** la deuxième surface d'appui (30) en forme de cuvette est ouverte vers le haut et délimitée vers le bas par une deuxième surface de butée (32) pour définir la position de montage de la plaque de support (10) sur le deuxième point de suspension (18) du rail de fixation (12).

7. Dispositif de manutention selon la revendication 5 ou 6, **caractérisé en ce que** le levier de blocage (22) est monté pivotant sur la plaque de support (10) en dessous de la deuxième surface de butée (28).

8. Dispositif de manutention selon la revendication 7, **caractérisé en ce que** le levier de blocage (22) comporte une saillie de blocage (38) qui, dans la position de montage de la plaque de support (10), enserre la barre profilée (20) sur le deuxième point de suspension (18) en face de la deuxième surface d'appui (30).

9. Dispositif de manutention selon la revendication 7 ou 8, **caractérisé en ce que** le levier de blocage (22), dans la position de montage de la plaque de support (10), peut être fixé dans sa position de blocage par une vis de serrage (44).

10. Dispositif de manutention selon l'une quelconque des revendications 1 à 9, **caractérisé en ce que** lesdits au moins deux rails de fixation (12) du système de support (14) sont disposés chacun parallèlement aux barres profilées (20) agencées sur celui-ci et sont situés à distance l'un de l'autre.

11. Dispositif de manutention selon l'une quelconque des revendications 1 à 10, **caractérisé en ce que** les rails de fixation (12) sont formés chacun par des profilés extrudés avec des sections constantes sur toute leur longueur.

12. Dispositif de manutention selon l'une quelconque des revendications 1 à 11, **caractérisé en ce qu'**une pluralité de plaques de support (10) agencées parallèlement peuvent être fixées de manière amovible sur les rails de fixation (12).
